(19) Europäisches Patentamt
European Patent Office
Office européen des brevets

(11) Veröffentlichungsnummer: **0 056 441**
**B1**

# (12) EUROPÄISCHE PATENTSCHRIFT

(45) Veröffentlichungstag der Patentschrift: **23.01.85**

(51) Int. Cl.[4]: **C 09 D 3/80,** C 08 L 25/14, C 08 L 33/06

(21) Anmeldenummer: **81108883.0**

(22) Anmeldetag: **24.10.81**

(54) **Anstrichmittel auf Basis wässriger Bindemittelpolymerisat-Dispersionen, die untergeordnete Mengen eines Aminogruppen aufweisenden Polymerisats enthalten.**

(30) Priorität: **22.12.80 DE 3048493**

(43) Veröffentlichungstag der Anmeldung: **28.07.82 Patentblatt 82/30**

(45) Bekanntmachung des Hinweises auf die Patenterteilung: **23.01.85 Patentblatt 85/4**

(84) Benannte Vertragsstaaten: **AT BE CH DE FR GB IT LI NL SE**

(56) Entgegenhaltungen: **DE - A - 2 547 970**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Florus, Gerhard, Dr., Otto-Dill-Strasse 22, D-6700 Ludwigshafen (DE)**
Erfinder: **Geelhaar, Hans Joachim, Dr., Max-Slevogt-Strasse 7, D-6710 Frankenthal (DE)**
Erfinder: **Kossmann, Heribert, Windestrasse 30, D-6700 Ludwigshafen (DE)**
Erfinder: **Ley, Gregor, Dr., In den Trankstuecken, D-6719 Wattenheim (DE)**
Erfinder: **Pawliczek, Josef Bernd, Dr., Carl-Goerdeler-Strasse 22, D-6720 Speyer (DE)**

**EP 0 056 441 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Diese Erfindung betrifft Anstrichmittel auf Basis wäßriger Bindemittelpolymerisat-Dispersionen, die eine verbesserte Naßhaftung, insbesondere auf Alkydharzuntergründen aufweisen.

Bekanntlich weisen viele Anstrichmittel auf Basis wäßriger Bindemittelpolymerisat-Dispersionen auf Alkydharzuntergründen, insbesondere auf glänzenden Alkydlackflächen eine schlechte Naßhaftung auf. Man hat daher schon versucht, wie dies in der DE-AS 1 284 006 beschrieben ist, anstelle von wäßrigen Polyacrylat-Dispersionen Gemische aus derartigen Dispersionen mit solchen wäßrigen Dispersionen zu verwenden, die Copolymerisate von Hydroxyl-, Amino-, Amido- oder Ureidogruppen als polare Gruppen aufweisende Monomere einpolymerisiert enthielten, wobei diese in Wasser unlöslichen Copolymerisate mit den polaren Gruppen in untergeordneter Menge eingesetzt wurden und eine Teilchengröße aufwiesen, die um mindestens 30% unter der der Acrylesterpolymerisate lag. Dieses Vorgehen bedingt jedoch die Herstellung und Lagerung von zwei Dispersionen und einen Mischvorgang und verursacht daher erhebliche Kosten.

Nach den Angaben der französischen Patentschrift 7 131 926 und der britischen Patentschrift 1 363 278 sollen wäßrige Polymerisat-Dispersionen auf Alkydharzuntergründen haftende Anstrichfarben ergeben, wenn die Polymerisate sowohl olefinisch ungesättigt Dicarbonsäuren und Monomere mit Aminoalkylestergruppen, die freie Wasserstoffatome am Stickstoffatom enthalten, einpolymerisiert enthalten. Derartige wäßrige Polymerisat-Dispersionen neigen jedoch zur Agglomeration, und die Lagerfähigkeit der Dispersionen ist begrenzt. Außerdem läßt die Witterungsbeständigkeit der aus den Polymerisat-Dispersionen hergestellten Anstriche wegen erhöhter Neigung zur Vergilbung zu wünschen übrig.

Aus der DE-OS 2 547 970 ist ein Verfahren zur Herstellung von wäßrigen Dispersionen von N-Vinylimidazol einpolymerisiert enthaltenden Copolymerisat-Dispersionen bekannt, die als Bindemittel für Anstrichmittel vorgesehen sind und eine verbesserte Naßhaftung auf Alkydharz- und Ölfarbuntergründen aufweisen, die auch bei Nässeeinwirkung und Temperaturschwankungen erhalten bleiben soll. Die Copolymerisate sollen vorzugsweise 1 bis 3% ihres Gewichts an N-Vinylimidazol einpolymerisiert enthalten. Der Nachteil ist hierbei jedoch, daß bei Verwendung üblicher Rezepte und Fahrweisen erhebliche Probleme mit Stippen- und Koagulat-Bildung, niederem Umsatz, störendem Geruch und Gelbfärbung der Dispersion und/oder des Bindemittelfilms auftreten.

Aus DE-OS 2 451 772 und DE-OS 2 508 588 sind außerdem wäßrige Dispersionen von Copolymerisaten bekannt, die aufgrund ihres Gehaltes an einpolymerisierten Glycidylestern bei Zusatz von Ammoniak pigmentierte Dispersionsfarben ergeben sollen, die gleichfalls eine hohe Naßhaftung aufweisen sollen. Derartige Dispersionen lassen sich jedoch wegen der pH-Wert abhängigen Reaktionen der Glycidylgruppen mit Wasser oder anderen Stoffen nur schwer reproduzierbar herstellen.

Schließlich hat man auch schon versucht, die Naßhaftung von Carboxylgruppen aufweisenden Copolymerisat-Latices dadurch zu verbessern, daß man sie mit Aziredinen umgesetzt hat (vgl. GB-PS 1 088 105). Wegen der hohen Giftigkeit der hierfür besonders geeigneten Aziridine mit niedrigem Molgewicht (Ethylenimin und Propylenimin) ist aber nicht nur bei der Herstellung solcher Dispersionen besondere Vorsicht geboten, sondern es muß auch sichergestellt.sein, daß die zugesetzten Aziridine vor Auslieferung der Produkte vollständig abreagiert haben, um eine Gefährdung Dritter sicher auszuschließen.

Allen diesen Wegen zur Erzielung der Naßhaftung auf glänzenden Alkydlackflächen ist aber gemeinsam, daß entsprechende Modifizierungen an den Bindemitteldispersionen selbst vorgenommen werden müssen. Es müssen also neue Dispersionen entwickelt, hergestellt, gelagert und eingesetzt werden, und man kann nicht auf die eingeführten, alt bewährten Bindemittel-Dispersionen zurückgreifen. Diesem gravierenden Nachteil hilft die vorliegende Erfindung ab.

Es wurde nämlich gefunden, daß Anstrichmittel auf Basis wäßriger Bindemittelpolymerisat-Dispersionen, die eine untergeordnete Menge eines Aminogruppen aufweisenden Polymerisats enthalten, diese Nachteile nicht aufweisen aber eine hervorragende Naßhaftung zeigen, wenn sie einen Gehalt von 0,5 bis 5 Gew.-%, bezogen auf das Bindemittelpolymerisat, eines wasserlöslichen N-Vinylimidazopolymerisats, das mindestens 10% seines Gewichts an N-Vinylimidazol und keine Monomeren mit Säuregruppen einpolymerisiert enthält, enthalten.

Als Bindemittelpolymerisat-Dispersionen für die Anstrichmittel kommen die hierfür üblichen Polymerisat-Dispersionen auf Basis von Acrylester-Styrol-Copolymerisaten mit etwa gleichen Anteilen an meist 1 bis 4 C-Atomen enthaltenden Alkylestern der Acrylsäure und Styrol, Vinylestercopolymerisate und Vinylchloridcopolymerisate in Frage wie sie im Handel erhältlich sind. Sie weisen im allgemeinen eine Polymerisat-Konzentrationen von 40 bis 60 Gew.-% auf und können in untergeordneten Mengen Comonomere mit polaren Gruppen, z. B. Acryl- und/oder Methacrylsäure und/oder deren Amide, Vinylsulfonsäure oder deren Alkalisalze, N-Methylolamide $\alpha,\beta$-monoolefinisch ungesättigter Mono- und/oder Dicarbonsäuren wie N-Methylolmethacrylamid und Hydroximethyldiacetonacrylamid vorzugsweise in Mengen von zusammen 0,5 bis 5 Gew.-% einpolymerisiert enthalten.

Die als Naßhaftung verbessernde Zusätze geeigneten wasserlöslichen N-Vinylimidazolpolymerisate sollen keine Monomeren mit Säuregruppen einpolymerisiert enthalten und können in an sich üblicher Weise, beispielsweise nach den Angaben der DE-OS 2 758 122 durch Lösungs- oder Fällungs-

polymerisation hergestellt sein. Sehr gut wirksam sind z. B. Homopolymerisate des N-Vinylimidazols mit K-Werten, die meist 25 bis 50 betragen (gemessen in Dimethylformamid bei 25° C, Konzentration 3 Gew.-%) und die in wäßriger oder wäßrig alkoholischer Lösung unter Verwendung von als Initiatoren üblichen Azoverbindungen oder Peroxiden, wie Azobisisobuttersäurenitril, Kalium-, Ammonium- und Natriumpersulfat sowie Wasserstoffperoxid oder übliche Redoxsysteme, wie $H_2O_2$, Fe(II/III)-Salze, Ascorbinsäure hergestellt werden. Derartige Homopolymerisate können auch durch Fällungspolymerisation des N-Vinylimidazols in z. B. Essigsäureethylester unter Verwendung von radikalbildenden Katalysatoren der genannten Art mit Vorteil hergestellt sein.

Die als die Naßhaftung verbessernde Zusätze geeigneten wasserlöslichen Copolymerisate sollen mindestens 10% ihres Gewichts an N-Vinylimidazol einpolymerisiert enthalten. Als Comonomere kommen z. B. Acryl- und Methacrylamid und/oder Acryl- und/oder Methacryl- und/oder Vinylester von Polyalkylenoxiden, insbesondere von Polyethylenoxiden in Frage, die meist 5 bis 100, insbesondere 10 bis 80 Ethylenoxidreste enthalten. Die N-Vinylimidazol-Copolymerisate können auch andere Acryl- und/oder Methacrylester sowie Vinylester einpolymerisiert enthalten, die meist 4 bis 8 C-Atome aufweisen, z. B. Methyl-, Ethyl-, Propyl-, n-Butyl-, Isobutyl-, tert.-Butylacrylat und -methacrylat, Vinylacetat, Vinylpropionat und Vinylbutyrat. Beispiele für geeignete Copolymerisate sind z. B. ein Copolymerisat aus 60 bis 70% seines Gewichts an N-Vinylimidazol und 30 bis 40% eines Monoacrylats eines aus 80 Ethylenoxidresten aufgebauten Polyethylenoxids, ein Copolymerisat aus jeweils gleichen Mengen N-Vinylimidazol, Acrylamid und des zuvor genannten Polyethylenoxid-Acrylats und ein Copolymerisat aus 30 bis 40 Gew.-% N-Vinylimidazol und 60 bis 70 Gew.-% n-Butylacrylat. In Betracht kommen auch entsprechende Copolymerisate von N-Vinyl-methylimidazolen, wie N-Vinyl-2 methylimidazol.

Die genannten Copolymerisate können mit Vorteil durch Lösungspolymerisation in Isopropylalkohol/Wasser-Gemischen hergestellt und zur Entfernung von Restmonomeren sprühgetrocknet sein. Sie können bei der Herstellung der Anstrichmittel als Pulver oder in wäßriger oder wäßrig/alkoholischer Lösung eingesetzt werden.

Der Gehalt der Anstrichmittel an N-Vinylimidazol-Polymerisaten der genannten Art liegt vorzugsweise zwischen 0,1 bis 2 Gew.-%, bezogen auf die Menge des Bindemittelcopolymerisats. Sie können den Anstrichmitteln für sich z. B. als letzte Komponente zugefügt werden, sie können jedoch auch den Bindemittelpolymerisat-Dispersionen vor deren Einsatz für die Herstellung der Anstrichmittel zugefügt sein.

Zusätzlich zu den N-Vinylimidazolpolymerisaten und den Bindemittelpolymerisat-Dispersionen können die Anstrichmittel die hierfür üblichen weiteren Bestandteile enthalten. Als solche kommen vor allem Pigmente wie Titandioxid (Rutil), Lithopone, Bleiweiß und Farbpigmente, die auch als Farbpigmentzubereitungen eingesetzt werden können, Füllstoffe wie Kreide, Clay, Kieselgur oder Talkum. Stabilisier- und Dispergiermittel, wie niedermolekulare Poly(meth)acrylsäuren oder Ethylenoxid-Addukte, z. B. des p-Nonylphenols, Verdickungsmittel, Frostschutzmittel und Antischaummittel in Frage. Der Gehalt der Anstrichmittel an den Bindemittelpolymerisat-Dispersionen liegt im allgemeinen bei 7 bis 10 Gew.-%, das entspricht einem Gehalt an Bindemittel (fest) von 3,5 bis 35 Gew.-%. Der Gehalt an Pigmenten und Füllstoffen beträgt meist 1 bis 60 Gew.-%, der Gehalt an Stabilisier- und Dispergiermitteln im 0,3 bis 5 und die Menge der übrigen Zusatzstoffe im Bereich von 0,1 bis 10 Gew.-%.

Bestimmung der Trocken- und Naßhaftung von Anstrichen auf glänzenden Alkydharzuntergünden

1 mm starke Aluminiumbleche werden mit einem Schwingschleifer in einer Tiefe von etwa 20 µ aufgerauht. Auf diese aufgerauhten Bleche wird mit einer Rakel (Rakelspalthöhe 120 µ) ein 32 cm langer und 6 cm breiter Streifen eines handelsüblichen Alkydharzlackes aufgebracht. Man lagert 24 Stunden bei 23° C und 50% rel. Luftfeuchtigkeit sowie anschließend 5 Tage bei 45° C im Umluftschrank. Nach weiteren 3 bis 10 Tagen Lagerung bei 23° C und 50% rel. Luftfeuchtigkeit wird auf die Alkydharzoberflächen mit einer 250-µ-Rakel (Breite 4 cm) die zu prüfende Polymer-Dispersion aufgestrichen. In den noch nassen Auftrag wird ein 6 cm breiter, faltenfreier Streifen eines Baumwollgewebes (Kaliko) unter leichtem Druck eingelegt und sofort durch 3-maliges Hin- und Herbewegen einer 250-µ-Rakel weitere Dispersion aufgebracht. Es wird nun 3 bis 4 Tage getrocknet und die Ränder der Probestreifen abgeschnitten, so daß eine Streifenbreite von 3,5 cm resultiert.

Die Probestreifen werden dann zur Hälfte 2 Stunden lang in vollentsalztes Wasser gestellt. Anschließend wird das Baumwollgewebe mit Hilfe der in DIN 53 289 angegebenen Rollenschälvorrichtung mit einer Abzugsgeschwindigkeit von 3 m/min abgezogen. Dabei wird beim Abziehen mit Hilfe der Reißmaschine die Schälkraft jeweils sowohl im trocknen als auch im gewässerten Teil des Probestreifens gemessen und das Bruchbild beurteilt. Die Schälkraft wird in üblicher Weise auf die Breite der Probe bezogen.

Die in den folgenden Beispielen angegebenen Teile und Prozente beziehen sich auf das Gewicht. Die darin angegebenen K-Werte wurden nach H. Fikentscher, Cellulose Chem.13 (1932) Seite 58 ff. in 3%iger Dimethylformamid-Lösung bestimmt.

## Herstellung der N-Vinylimidazol-Polymerisate

### Beispiel 1

In einem mit Rückflußkühler und Rührer ausgestatteten Polymerisationsgefäß werden 315 Teile Ethanol, 315 Teile Wasser, 140 Teile N-Vinylimidazol, 70 Teile eines nach den Angaben der DE-OS 2 758 122 hergestellten Acrylats eines 80 Ethylenoxideinheiten aufweisenden Polyethylenoxids, 2,1 Teile Hydroxylammoniumsulfat und 7 Teile Azobisisobutyronitril gemischt und die erhaltene Lösung durch Einleiten von Stickstoff entlüftet und dann auf 80° C aufgeheizt. Man polymerisiert 3 Stunden bei 80° C, läßt abkühlen und erhält eine gelbe, etwa 25%ige Lösung eines Copolymerisats, das den K-Wert 30 hat.

### Beispiel 2

Man arbeitet wie in Beispiel 1 angegeben, verwendet aber anstelle des Ethanols die gleiche Menge Propylenglykol. Man erhält dann die Lösung eines Copolymerisats, dessen K-Wert 33 beträgt.

### Beispiel 3

Man arbeitet wie in Beispiel 1 angegeben, verwendet jedoch anstelle des Ethanols die gleiche Menge Isopropanol und je 70 Teile N-Vinylimidazol, Acrylamid und Polyethylenglykolacrylat (allgemeine Formel

$$R-O-(CH_2-CH_2-O)_X-\underset{\underset{O}{\|}}{C}-CH=CH_2$$

in der R für einen $C_{16-18}$-Fettalkoholrest und X für 50 stehen) und entfernt nach Abschluß der Polymerisation das Lösungsmittelgemisch durch Destillation bei 80° C unter vermindertem Druck (etwa 70 mbar). Man setzt dann etwa 300 Teile Wasser zu, das erneut, zuletzt unter vermindertem Druck abgedampft wird. Dies wird mehrmals wiederholt, bis die erhaltenen Polymerlösung praktisch nicht mehr nach Isopropanol riecht. Dem Destillationrückstand setzt man zuletzt so viel Teile Wasser zu, daß man eine 25%ige wäßrige Lösung des Copolymerisats erhält, das den K-Wert 32 hat.

### Beispiel 4

Man arbeitet wie in Beispiel 3 angegeben, setzt jedoch anstelle des Polyethylenglykolacrylats und des Acrylamids 140 Teile n-Butylacrylat ein und ersetzt das azeotrop abgedampfte Lösungsmittelgemisch durch 630 Teile Ethanol. Man erhält dann eine 25%ige ethanolische Lösung eines Copolymerisats des K-Werts 25.

### Beispiel 5

In einem mit Rückflußkühlung, Rührer und zwei Zulaufgefäßen ausgerüsteten Polymerisationsgefäß werden 90% eines Zulaufs I aus 420 Teilen N-Vinylimidazol, 210 Teilen des in Beipiel 1 angegebenen Polyethylenglykol-Acrylats, 700 Teilen Isopropanol und 950 Teilen Wasser vorgelegt und auf 80° C erwärmt. Man gibt dann 20 Teile eines Zulaufs II aus 135 Teilen Aceton, 105 Teilen Isopropanol und 21 Teilen Azobisisobuttersäurenitril zu und polymerisiert 15 Minuten lang. Danach werden die restlichen Zuläufe I und II gleichmäßig innerhalb von 2 Stunden zulaufen lassen. Man läßt noch 1 Stunde nachpolymerisieren und erhält nach dem Abkühlen eine Lösung eines Copolymerisats vom K-Wert 30. Die Lösung wird in einem Labor-Sprühtrockner (Minispray HO) bei einer Trocknereingangstemperatur von 130° C und einer Ausgangstemperatur um 70° C bei einem Durchsatz von etwa 0,8 l/h sprühgetrocknet. Man erhält ein schwach gelb gefärbtes in Wasser und Wasseralkoholgemischen gut lösliches Pulver, das nur sehr wenig nach N-Vinylimidazol riecht.

### Beispiel 6

Man arbeitet wie im Beispiel 5 angegebenen, setzt jedoch 630 Teile N-Vinylimidazol ein. Erhalten wird dann ein Copolymerisat des K-Werts 34, das nach dem Sprühtrocknen gleichfalls als schwach gelb gefärbtes Pulver anfällt und als solches oder aus wäßrigen oder wäßrig alkoholischen Lösungen

Dispersionsfarben zugesetzt werden kann.

Beispiel 7

In einem mit Rückflußkühler und Rührer ausgestatteten Polymerisationsgefäß werden 210 Teile N-Vinylimidazol und 630 Teile Essigsäureethylester vorgelegt und auf 60°C erwärmt. Man gibt dann 4 Teile Azobisisobutyronitril zu und erwärmt nach 2 Stunden auf 80°C. Nach 4 Stunden werden weitere 2 Teile Azobisisobutyronitril zugegeben und nach insgesamt 6stündiger Polymerisationszeit abkühlen lassen. Das als feines Pulver aus dem Polymerisationsgemisch ausgefallene Polymerisat wird abfiltriert, mit Essigester gewaschen und bei 50°C unter vermindertem Druck getrocknet. Man erhält 190 Teile Poly-N-Vinylimidazol des K-Werts 44.

Herstellung der Anstrichmittel zu den Beispielen

Die nach den Angaben der Beispiele 1 bis 7 hergestellten N-Vinylimidazol-Polymerisate werden in einer Menge von 1% (fest auf fest) zu handelsüblichen Polyacrylatdispersionen zugesetzt. Als handelsübliche Polyacrylatdispersionen werden Anstrichdispersionen (A) auf Basis Styrol/n-Butylacrylat und (B) auf Basis Methylmethacrylat/n-Butylacrylat eingesetzt. Die Haftung der reinen Bindemittelfilme wird entsprechend den obigen Angaben bestimmt. Die dabei erhaltenen Ergebnisse sind in der folgenden Tabelle zusammengefaßt. Bei den angegebenen Werten für die Schälkraft handelt es sich hierbei um solche, bei denen Adhäsionsbruch vorlag.

| Bindemittel-Dispersion | N-Vinylimidazol Polymerisat von Beispiel Nr. | Schälkraft in N/3,5 cm trocken | naß |
|---|---|---|---|
| A | 1 | 3,63–5,39 | 4,90–7,85 |
| | 2 | 4,90–7,85 | 6,87–12,26 |
| | 3 | 3,43–4,20 | 3,92–5,88 |
| | 4 | 2,65–4,32 | 1,96–3,92 |
| | 5 | 5,7–10,8 | 5,2–13,2 |
| | 6 | 7,85–10,79 | 7,85–12,75 |
| | 7 | 7,35–16,4 | 11,3–19,6 |
| Vergleichsversuch | – | 1,47 | 1,28 |
| B | 1 | 5,88–13,24 | 5,88–7,26 |
| | 2 | 8,53–15,69 | 8,53–12,26 |
| | 3 | 3,43–4,61 | 2,94–4,90 |
| | 4 | 2,45–3,14 | 2,16–3,92 |
| | 5 | 7,2–11,8 | 1,96–6,8 |
| | 6 | 4,9–8,3 | 2,6–5,3 |
| | 7 | 12,7–15,7 | 7,2–16,5 |
| Vergleichsversuch | – | 1,28–1,67 | 0,98–1,28 |

**Patentanspruch**

Anstrichmittel auf Basis wäßriger Bindemittelpolymerisat-Dispersionen, die eine untergeordnete Menge eines aminogruppenaufweisenden Polymerisats enthalten, gekennzeichnet durch einen Gehalt von 0,5 bis 5 Gew.-%, bezogen auf das Bindemittelpolymerisat, eines wasserlöslichen N-Vinylimidazolpolymerisats, das mindestens 10% seines Gewichts an N-Vinylimidazol und keine Monomeren mit Säuregruppen einpolymerisiert enthält.

**Claim**

A paint based on an aqueous binder polymer dispersion containing a minor amount of an amino-containing polymer, which paint contains from 0.5 to 5% weight, based on the binder polymer, of a water-soluble N-vinylimidazole polymer containing, as copolymerized units, at least 10% by weight of N-vinylimidazole and no monomers having acid groups.

**Revendication**

Peintures à base de dispersions aqueuses de liants polymères, contenant une proportion mineure d'un polymérisat à groupes amino, caractérisées en ce qu'elles contiennent entre 0,5 et 5% en poids par rapport au liant polymère d'un polymérisat hydrosoluble du N-vinyl-imidazole, dans lequel sont polymérisés au moins 10% de son poids de N-vinyl-imidazole, mais que est exempt de monomères à groupes acide.